# EUROPEAN PATENT APPLICATION

(11) **EP 2 765 674 A1**
(43) Date of publication of application: **13.08.2014**
(21) Application number: 13154661.6
(22) Date of filing: 08.02.2013
(51) Int. Cl.: H02J 7/00

(54) **Method for autodetection and setting of battery voltage rating in an electrical substation**

(71) Applicant: Alstom Technology Ltd, 5400 Baden (CH)
(72) Inventor: Richards, Simon, Staffordshire, WS15 3DZ (GB); Venkatamaran, Krishnakumar, Staffordshire, ST17 0GZ (GB)
(74) Representative: Ilgart, Jean-Christophe

(57) **Abstract**

The invention concerns a method for autodetection and setting of battery voltage rating in an electrical substation, wherein said substation comprises plant items which directly carry and switch the electrical power and electronic devices which protect, measure and control the plant and which require a battery to operate. Said method comprises the following steps:
- when said battery is energized, measuring the voltage of the battery and determine the most likely nominal voltage that the battery must be,
- automatically setting high and low alarm thresholds based on typical allowed excursions from determined nominal voltage.

## Description

### BACKGROUND OF THE INVENTION

### 1. Field of the invention

This invention relates to a method for autodetection and setting of battery voltage rating in an electrical substation.

### 2. Description of the related art

Electrical power generation stations, transmission substations, distribution substations, industrial plant substations and passenger transport substations are important nodes in the routing and switching of power flows. Each of these locations (hereinafter generalized as "substations") has an important task to play within the electrical power system.

The substations contain numerous plant items which directly carry and switch the electrical power, with these (generally medium, high or extra-high voltage) plant items termed the "primary" equipment. Associated with the primary equipment are devices which protect, measure and control the plant. Such devices are termed as secondary equipment, and are typically electronic in nature, for example protection relays, bay controllers and measurement centres. These devices are termed as IEDs (intelligent electronic devices). Such devices require an auxiliary power source in order to operate, and this supply is often provided by a substation battery.

The field of the invention is to ease the application of self-monitoring of the substation battery which powers the IEDs. Primarily this is done by means of a technique to automatically detect the nominal voltage rating of that battery upon first energization, and use that detected rating to automatically set supervision alarm thresholds.

As described in documents referenced [1] and [2] at the end of the description, modern IEDs often have a means to measure the level of voltage that is present at their own power supply terminals - this is the voltage output that the substation battery is providing. Often, the IEDs will also have the means to raise alarms if the measured voltage is too high or too low, to indicate that maintenance attention is required. Typically, the alarm thresholds need to be configured by the user, which requires knowledge of the actual nominal battery voltage on site, and the normal allowed tolerance on operation. This requires parameter configuration within the IED, which of course takes time, and a degree of skill.

The prior art solutions require that the user themselves sets the battery voltage low and high alarms. So these solutions must have explicit knowledge of the battery installed at the specific site, and also an appreciation of how far away from a battery nominal it might be permitted to drift, before an alarm should occur. If any of this knowledge is missing, incorrect setting would result.

The purpose of the invention is to effectively de-skills the invention method for autodetection and setting of battery voltage rating in an electrical substation, making it less likely that a mistake could occur.

### SUMMARY OF THE INVENTION

The invention concerns a method for autodetection and setting of battery voltage rating in an electrical substation, wherein said substation comprises plant items which directly carry and switch the electrical power and electronic devices which protect, measure and control the plant and which require a battery to operate, **characterized in that** it comprises the following steps:
- when said battery is energized, measuring the voltage of the battery and determine the most likely nominal voltage that the battery must be,
- automatically setting high and low alarm thresholds based on typical allowed excursions from determined nominal voltage.

Advantageously the method comprises the following steps:
- read DC voltage Vdc,
- average DC voltage reading,
- display averaged value,
- compare averaged DC reading against received predefined ranges Vdc1 lower limit and Vdc1 upper limit:
   - if Vdc is outside the ranges, manual setup threshold,
   - if Vdc is inside the ranges, display proposed threshold value and then accept and set:
      * if the response is "no", manual set up threshold,
      * if the response is "yes", setup threshold.

Advantageously, a 24/27 Volts battery nominal is determined for a measured voltage between 19 Volts and 25.9 Volts; a 30/34 Volts battery nominal is determined for a measured voltage between 26 Volts and 37.9 Volts; a 48/54 Volts battery nominal is determined for a measured voltage between 38 Volts and 76.9 Volts; a 110/125 Volts battery nominal is determined for a measured voltage between 77 Volts and 153.9 Volts; a 220/250 Volts battery nominal is determined for a measured voltage above 154 Volts.

Advantageously, as a default the battery voltage high alarm is set at 120% of the lower nominal voltage determined and, as a default, the battery voltage low alarm is set at 107% of the lower nominal voltage determined.

Advantageously, the nominal voltage of the digital inputs to the electronic device is automatically set, if those are energized from the same battery supply as the main electronic device power supply terminals.

Advantageously, when used to auto-set the binary input thresholds, the thresholds are applied as:
- 80% of lower nominal voltage = guaranteed pick-up;
- 68% of lower nominal voltage = guaranteed drop-off.

The main advantage of the invention method is deskilling of the configuration process, which means less chance to make a mistake. The less configuration parameters there are the less chance to make an error, and the less time to perform the configuration process of an IED.

Although the prior art solutions measure the IED input voltage from the substation battery, none of them attempt to use that measured voltage to automatically allow the appropriate alarm thresholds for inputs to be made. This is the real innovative step.

Moreover, to make the task easier, the invention method proposes that when energized, there is a simple means to measure the voltage, determine the most likely nominal voltage that the battery must be, and then automatically set the alarm based on the knowledge of that voltage. Based on hardware and software facility, the electronic devices can measure the applied voltage and the intelligence in-built in the electronic devices can determine the most likely nominal voltage. The nominal voltages fed to the electronic devices are predefined and universal for the DC batteries based on which the range can be pre-set.

### BRIEF DESCRIPTION OF THE DRAWINGS

Figure 1 is a flowchart of the invention method.
Figure 2 is a block diagram of the invention method.

### DESCRIPTION OF THE PREFERRED EMBODIMENTS

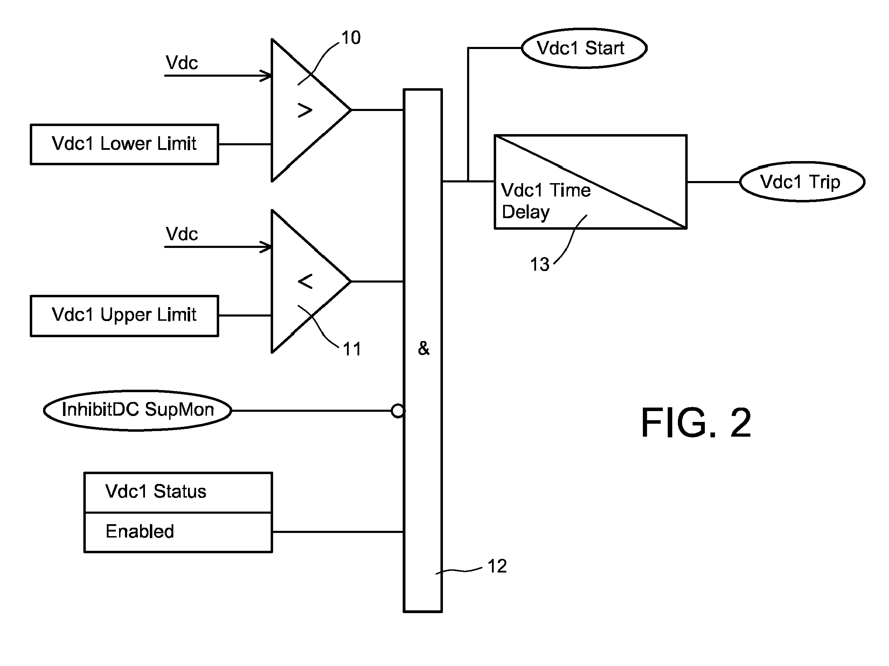

In the invention the input voltage at the relay's power supply terminals is measured, as per many IEDs already on the market today. However, instead of the user being forced to set the alarm thresholds on which the battery supervision will be based, these can be determined automatically as done in the invention method. As shown in Figure 2, as soon as the IED is powered up through an external DC auxiliary power supply from a battery, the algorithm in the IED measures the applied voltage Vdc and sets automatically the alarm thresholds based on the default settings provided.

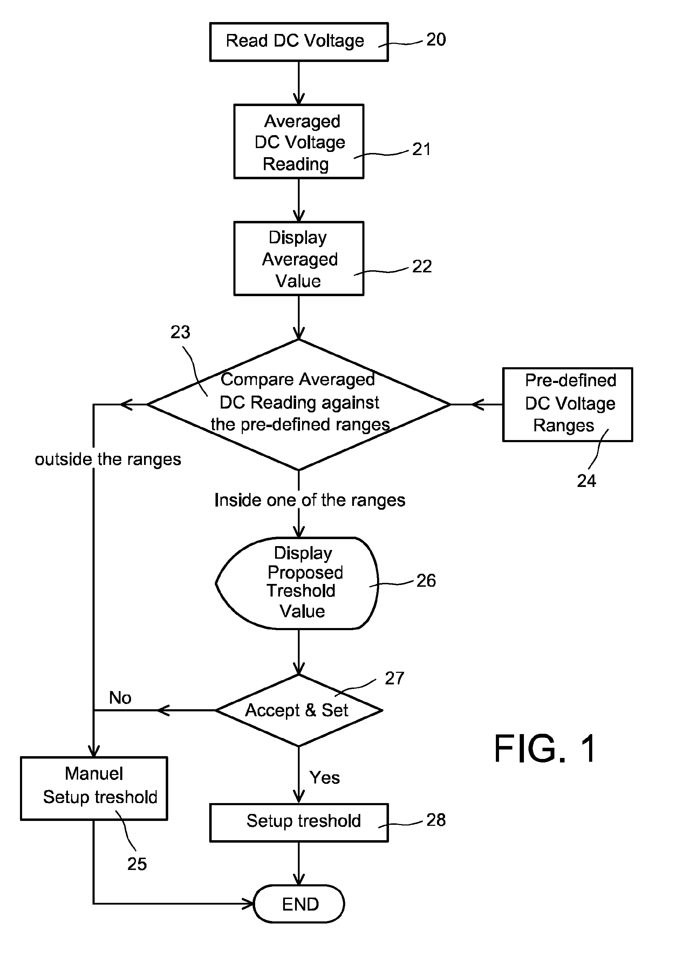

So Figure 1 shows automatic setup of alarm threshold. We have successively:
- read DC voltage Vdc (20),
- average DC voltage reading (21),
- display averaged value (22),
- compare (23) averaged DC reading against received predefined ranges (24) Vdc1 lower limit and Vdc1 upper limit:
   - if Vdc is outside the ranges, manual setup threshold (25),
   - if Vdc is inside the ranges, display proposed threshold value (26) and then accept and set (27):
      * if the response is "no", manual set up threshold (25),
      * if the response is "yes", setup threshold (28).

So the invention method comprises the following steps:
- when said battery is energized, measuring the voltage of the battery Vdc and determine the most likely nominal voltage Vdc1 that the battery must be,
- automatically setting high and low alarm thresholds based on typical allowed excursions from determined nominal voltage Vdc1 lower limit and Vdc1 upper limit.

Figure 2 show a device for DC voltage threshold setting. Said device comprises:
- a comparator 10 to compare Vdc to a Vdc1 lower limit,
- a comparator 11 to compare Vdc to Vdc1 upper limit,
- a circuit 12 receiving the outputs of these two comparators and a inhibition signal InhibitDCSupMon, and a signal Vdc1 Status enabled,
- and a delay 13 receiving the output of the circuit 12 corresponding to a Vdc1 start and which outputs a signal Vdc1 trip.

A typical embodiment of the invention is that the battery alarm thresholds are marked as "Automatic", instead of being fixed to a threshold during the IED configuration process. When marked as automatic, upon first energisation, or at any time when visiting a Commissioning menu within the IED, personnel would be prompted with the option to automatically detect the battery voltage, and automatically set the alarm thresholds from it. A commissioning menu is a tabular structure in which the settings required for commissioning tests are keyed in and stored. These are made up of cells with row and column addresses. For the invention method, a setting is provided in the commissioning menu, wherein the user will be prompted with an option to automatically detect the battery voltage and set the alarm thresholds.

As a typical example (voltage thresholds may vary in an actual implementation), the battery voltage which would be determined could be as follows:
A 24/27 Volts battery nominal would be determined for a measured voltage between 19 Volts and 25.9 Volts.
A 30/34 Volts battery nominal would be determined for a measured voltage between 26 Volts and 37.9 Volts.
A 48/54 Volts battery nominal would be determined for a measured voltage between 38 Volts and 76.9 Volts.
A 110/125 Volts battery nominal would be determined for a measured voltage between 77 Volts and 153.9 Volts.
A 220/250 Volts battery nominal would be determined for a measured voltage above 154 Volts.

As a default, the battery voltage high alarm would be set at 120% of the lower nominal voltage determined (eg. 120% of 24 volts, if a 24/27 volts battery were determined). As a default, the battery voltage low alarm would be set at 107% of the lower nominal voltage determined.

In a variant it is possible to give the user the option to automatically set the nominal voltage of the digital inputs to the IED, if those are energized from the same battery supply as the main IED power supply terminals.

As a typical example, when used to auto-set the binary input thresholds, the thresholds would be applied as:
- 80% of lower nominal voltage = guaranteed pick-up;
- 68% of lower nominal voltage = guaranteed drop-off.

This would also allow the binary inputs to be declared as "Automatic", should the user wish the thresholds to be applied by autodetection.

### REFERENCES

[1] "SEL - 751A Feeder Protection Relay" (Schweitzer Engineering Laboratories, Inc. https://www.selinc.com/workArea/DownloadAsset.aspx?id=2 822).
[2] "BA 300 Substation Battery Monitoring" (Alstom Grid http://www.alstom.com/Global/Grid/Resources/Documents/A utomation/Measurements/BA300.pdf).

## Claims

1. A method for autodetection and setting of battery voltage rating in an electrical substation, wherein said substation comprises plant items which directly carry and switch the electrical power and electronic devices which protect, measure and control the plant and which require a battery to operate, **characterized in that** it comprises the following steps:
- when said battery is energized, measuring the voltage of the battery and determine the most likely nominal voltage that the battery must be,
- automatically setting high and low alarm thresholds based on typical allowed excursions from determined nominal voltage.

2. The method pursuant claim 1 comprising the following steps:
- read DC voltage Vdc (20),
- average DC voltage reading (21),
- display averaged value (22),
- compare (23) averaged DC reading against received predefined ranges (24) Vdc1 lower limit and Vdc1 upper limit:
• if Vdc is outside the ranges, manual setup threshold (25),
• if Vdc is inside the ranges, display proposed threshold value (26) and then accept and set (27):
* if the response is "no", manual set up threshold (25),
* if the response is "yes", setup threshold (28).

3. The method pursuant claim 1 wherein a 24/27 Volts battery nominal is determined for a measured voltage between 19 Volts and 25.9 Volts; a 30/34 Volts battery nominal is determined for a measured voltage between 26 Volts and 37.9 Volts; a 48/54 Volts battery nominal is determined for a measured voltage between 38 Volts and 76.9 Volts; a 110/125 Volts battery nominal is determined for a measured voltage between 77 Volts and 153.9 Volts; a 220/250 Volts battery nominal is determined for a measured voltage above 154 Volts.

4. The method pursuant claim 1, wherein, as a default, the battery voltage high alarm is set at 120% of the lower nominal voltage determined and, as a default, the battery voltage low alarm is set at 107% of the lower nominal voltage determined.

5. The method pursuant claim 1, wherein the nominal voltage of the digital inputs to the electronic device is automatically set, if those are energized fro the same battery supply as the main electronic device power supply terminals.

6. The method pursuant claim 5 wherein, when used to auto-set the binary input thresholds, the thresholds are applied as:
• 80% of lower nominal voltage = guaranteed pick-up;
• 68% of lower nominal voltage = guaranteed drop-off.
